# EUROPEAN PATENT APPLICATION

(11) **EP 2 469 820 A1**
(43) Date of publication of application: **27.06.2012**
(21) Application number: 10306475.4
(22) Date of filing: 21.12.2010
(51) Int. Cl.: H04M 3/42

(54) **Method and system for making phone calls**

(71) Applicant: Alcatel Lucent, 75007 Paris (FR)
(72) Inventor: Sorokin, Roman, 92707, Colombes (FR)
(74) Representative: Nicolle, Olivier

(57) **Abstract**

A method for making phone calls in an enterprise PBX-type communication system, comprising the steps of sensing proximate to each terminal, an identity using non-tactile radio means; and loading proximate terminal, from said database, with a user profile corresponding to said proximately-sensed identity, thereby enabling the identity of outgoing calls to correspond to the sensed identity. The terminals may be equipped with WIFI or bluetooth detection units and the positioning can be safer.

## Description

The present invention concerns a method and a system for making phone calls, in particular with a Private Branch Exchange communication system.

### BACKGROUND

This section introduces aspects that may be helpful in facilitating a better understanding of the invention. Accordingly, the statements of this section are to be read in this light and are not to be understood as admissions about what is in the prior art or what is not in the prior art.

Private Branch Exchange (PBX) communication systems for businesses comprise switching servers, and user profile databases comprising information of registered users.

The basic configuration of PBX communication systems is that each desk bound phone (ie. a "land line") in the PBX system is affected a user profile from the user profile database, comprising the telephone number of the terminal and, optionally, the identity, or name, of the user affected to the terminal.

The user profile is normally affected in a fixed manner to each terminal.

In today's globalised world there are increasing situations of personnel roaming, for example with teleworking offices, whereby personnel may wish to make a phone call from a terminal not configured with his or her profile. When such a user does call from such a terminal not configured with his profile, the person receiving the telephone call may get confused when the caller identity displayed by the system on his phone does not correspond to the real user talking.

In order to remedy this situation, it is known to have phone terminals from which each user must log-on to at the beginning of each day, and log-off from at the end of each day by entering user names and passwords by way of the keypad.

This solution, however, is time consuming when wishing to make a quick punctual telephone call, and requires the user to remember his user name and password to the PBX system.

An alternative is sought to better deal with this situation.

### BRIEF SUMMARY

An object of the present is therefore a method according to claim 1. Another object of the present is a system according to claim 8.

Further objects of the present invention are details in the appended claims.

An advantage of these embodiments is that there is no authentication needed from the user's perspective. Indeed, if the user is fitted with an appropriate radio device, he will be automatically recognized and the proximate terminal will be loaded with his user profile.

The activation of the user profile on the terminal is quick and dynamic.

### BRIEF DESCRIPTION

Some embodiments of devices and methods in accordance with embodiments of the present invention are now described, by way of example only, and with reference to the accompanying drawings, in which:
Figure 1 illustrates schematically a communication system according to a first embodiment;
Figure 2 illustrates schematically a flowchart depicting the operation of the system of figure 1;
Figure 3 illustrates a communication system according to a second embodiment;
Figure 4 illustrates schematically a flowchart depicting the operation of the system of figure 3.

### DETAILED DESCRIPTION

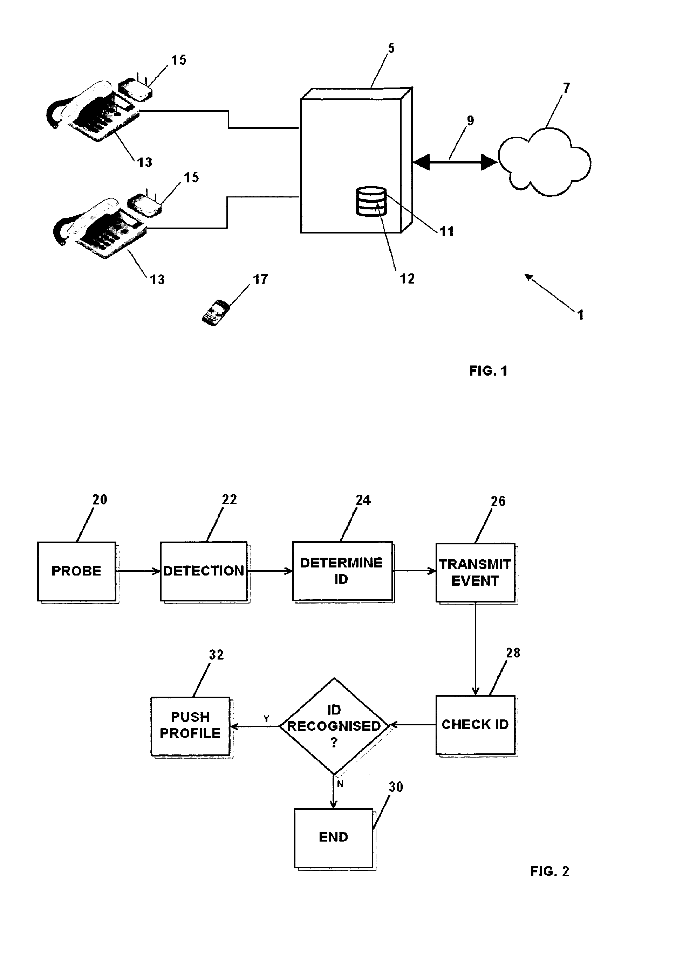

Figure 1 illustrates a Private Branch Exchange (PBX)-type communication system 1 according to an embodiment of the present invention.

The system comprises PBX server 5 connected to the public switched telephone network (PSTN) 7 via trunk lines 9.

The server 5 comprises, inter alia :
- PBX's internal switching network,
- a processor for data processing, control and logic,
   as known in the art, and as such won't be further detailed herein except where necessary.

The server 5 further comprises a storage device 11 comprising a database 12, said database comprising user-profiles of users registered on the communication system 1.

The system 1 further comprises a plurality of terminals 13 in communication with the server 5 for effecting incoming and outgoing call routing to the PSTN 7 via the server 5.

The terminals 13 comprise a user-profile as set by the server 5, said user profiles corresponding to information comprised in database 12. The server 5 may for example push a user profile to the terminal 13.

The user profile comprises information relative to the phone number of the terminal, and, optionally, the identity or name of the user affected the user profile. The user profile may further comprise links, information, addresses, or authentication information to auxiliary services such as voicemail, Short Message Services (SMS) application, and so on.

At least some of said terminals 13 are associated with a Wifi® tag 15 disposed close to the terminal 13. The Wifi tag 15 is adapted to probe for proximate Wifi devices 17. For example, Wifi tag 15 can probe for wifi device in a range of five meters, or preferably, within a range of 1-2 meters.

In particular, each Wifi tag 15 senses an identity reference of the Wifi device 17. Such an identity reference may for example be a Wifi controller MAC address, or other unique reference.

Each Wifi tag 15 is adapted to trigger an event on the server 5 upon detection of a Wifi device 17, and in particular to communicate to the server 5 via the terminal 15 the identity reference of the mobile device 17 detected.

Human users to the terminals may for example be fitted with a dual-band GSM/Wifi® portable telephone, which acts in this embodiment as the Wifi device 17. The Wifi telephone may be fitted with an identity reference of a user-profile corresponding to one of on the database 12. For example, an identity reference may correspond to the MAC address of the portable telephone can be associated with a particular user-profile.

Figure 2 illustrates a process of running the system 1 of figure 1.

The terminal 13 is initially loaded with a default user profile corresponding to that of the user for whom the terminal 13 is assigned.

Meanwhile, the Wifi tag 15 periodically probes (step 20) for proximate Wifi-enabled devices 17.

Once the Wifi tag 15 detects (step 22) a Wifi-enabled device 17, it interrogates the phone for an identity reference (step 24), or looks up an identity reference, for example a MAC address of the Wifi device 17 (step 24).

The Wifi tag 15 then sends a detection event to the server 5 (step 26) comprising the identity reference of the Wifi device 17 and, if needed, an identification of the terminal 13 associated with said wifi tag 15.

The server 5 probes the database 12 of user profiles for a user profile corresponding to the registered Wifi device 17 identity reference (step 28).

If the user-profile database 12 does not recognize the Wifi device 17 identity, then the server 5 ignores the Wifi tag 5 event (step 30).

If the user-profile database 12 recognizes the Wifi device 17 identity, then the server 5 loads the user-profile corresponding to the Wifi device 17 identity to the corresponding terminal 13 associated with the Wifi tag 15 that detected the Wifi device 17 (step 32). The user-profile pushed to the terminal 13 corresponds to the Wifi device's 17 identity.

The terminal is now loaded with the new user-profile, and that user profile will henceforth be used for communications, for example for making outgoing calls.

The terminal 13 is preferably temporarily associated with the custom user-profile, for the duration of the time portable Wifi device 17 remains identified by Wifi tag 15.

If multiple Wifi devices 17 are detected by a Wifi tag 15, the Wifi tag 15 can send multiple detected identities to the server 5. The server can be configured to handle the situation in different ways. For example, the server 5 can verify the identity (step 28) of each of the received identities from the Wifi tag 28, and request confirmation of the user of the terminal 13 of which of the validated user-profiles to push to the terminal (step 32).

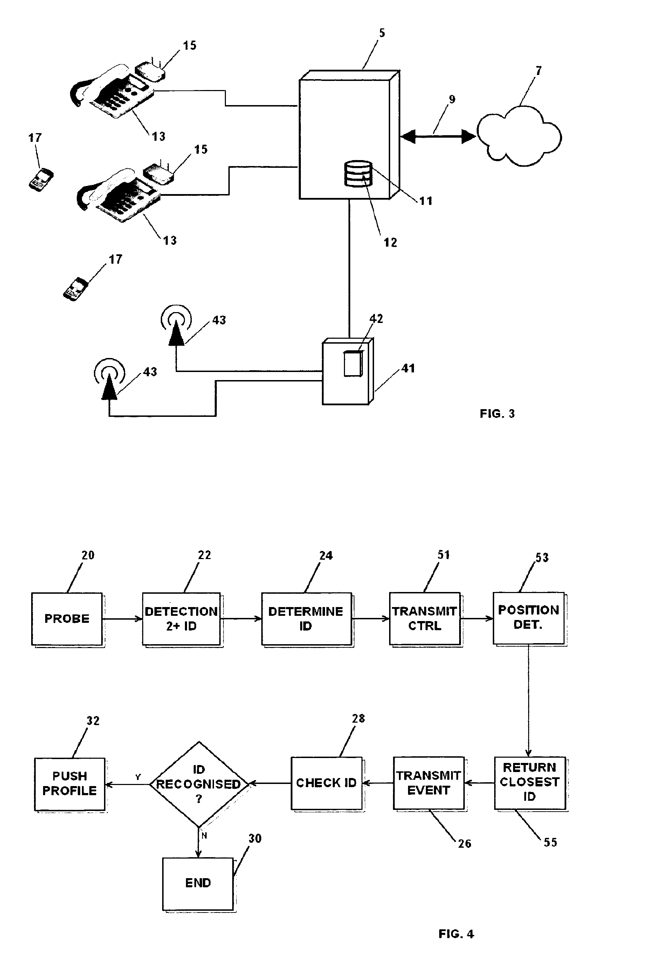

Figure 3 illustrates an alternative embodiment of the system 1 according to the present invention, according to which the system 1 of figure 1 further comprises a Wifi® hotspot controller 41.

A plurality of Wifi antennas 43, or relays or beacons, are disposed at regular or irregular intervals in the premises of the business housing the communication system 1.

The Wifi antennas 43 may be placed at known locations in the premises, and their coordinates may be recorded in the controller 41.

The Wifi antennas 43 and the Wifi hotspot controller 41 are adapted to sallow the mobile Wifi device 17, for example dual GSM/wifi portable telephones 17, to make calls with their enterprise telecom user-profile while roaming the premises. The Wifi controller 41 receives a call request for/from the user-profile in roaming mode, and routes the call through the PBX server 5, as is well known in the art.

The controller 41 further comprises a spatial orientation module 42, for example a processor, that is adapted to triangulate the location of any Wifi device 17 by the comparison of Wifi signal strength, ping times, or otherwise.

The controller 41 is thus able to determine the relative position of a plurality of Wifi devices 17, when said mobile devices 17 are within communication range of at least two Wifi antennas 43.

Alternatively, the orientation module 42 may comprise cartographic data, such that combining the distance calculation between one or more Wifi device 17 and the Wifi antenna 43, with positional constraints given by cartographic data, the module 42 is able to determine relative position of two or more Wifi devices 17.

The Wifi tags 15 also respond to Wifi antenna 34 reception strength signals, and are thus also able to be triangulated by the module 42.

The operation of the system 1 of figure 3 is identical to that of figure 1 as illustrated in flow chart at figure 2.

Indeed, as with the system of figure 1, if multiple Wifi devices 17 are detected by a Wifi tag 15, the server 5 can choose a particular user-profile according to a pre-configured criterion, for example by asking for confirmation of the user-profile to load to the user of the terminal.

The second embodiment, illustrated at figure 3, can also make use of the Wifi controller 41, and in particular its orientation module 42. Figure 4 illustrates a process of running the system 1 of figure 3.

The terminal 13 is initially loaded with a default user profile corresponding to that of the user for whom the terminal 13 is assigned.

Meanwhile, the Wifi tag 15 periodically probes (step 20) for proximate Wifi-enabled devices 17.

Once the Wifi tag 15 detects (step 22) a Wifi-enabled device 17, it interrogates the phone for an identity reference (step 24), or looks up an identity reference, for example a MAC address of the Wifi device 17 (step 24).

If multiple Wifi-enabled devices 17 are detected, and for which an identity reference is able to be determined, the Wifi tag 15 then sends the ID references of all identified devices 17 via the server 5 to the orientation module 42 of the Wifi controller 41 (step 51).

The orientation controller 42 then uses a number of possible techniques to probe the multiple detected Wifi-enabled devices 17 in addition to the Wifi tag 15 from which the detection originates, in order to determine a relative position of said Wifi tag 15 with respect to detected devices 17 (step 53). The orientation controller 42 can therefore estimate which of the multiple devices 17 is closest to the Wifi tag 15 (step 55).

The Wifi controller 41 then sends a detection event to the server 5 (step 57) comprising the identity reference of the closest determined Wifi device 17 and, if needed, an identification of the terminal 13 associated with said Wifi tag 15.

The server 5 probes the database 12 of user profiles for a user profile corresponding to the registered Wifi device 17 identity reference (step 28).

If the user-profile database 12 does not recognize the Wifi device 17 identity, then the server 5 ignores the Wifi tag 5 event (step 30).

If the user-profile database 12 recognizes the Wifi device 17 identity, then the server 5 loads the user-profile corresponding to the Wifi device 17 identity to the corresponding terminal 13 associated with the Wifi tag 15 that detected the Wifi device 17 (step 32). The user-profile pushed to the terminal 13 corresponds to the Wifi device's 17 identity.

The terminal is now loaded with the new user-profile, and that user profile will henceforth be used for communications, for example for making outgoing calls.

The terminal 13 is preferably temporarily associated with the custom user-profile, for the duration of the time portable Wifi device 17 remains identified by Wifi tag 15.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

In particular, variants of the above-described embodiments may use other radio waves communication protocols instead of Wifi, such as Bluetooth instead of Wifi. Other non-tactile radio communication means between the Wifi tag 15 and the Wifi device 17 are also possible.

Although localization is described above as being performed using Wifi signals, it is also possible to use GPS® (Global Positioning System) or GSM (Global System for Mobile Communications) signals to ascertain position relative to the Wifi tag.

Furthermore, in the above embodiments, the pushing of a new user profile to the terminal 13 may be conditioned upon a user confirming the new profile. For example, by the confirmation may be that the user is asked to confirm, manually or orally, the temporary or permanent change of the user profile on the terminal 13, whether a single or multiple device 17 have been detected.

Also, the pushing of a new user profile to the terminal, at least temporarily, may also enable a transient user to perform additional tasks from the terminal as if it were his own, for example send an SMS text message with his identity, or check his voicemail.

## Claims

1. A method for making phone calls in an enterprise PBX-type communication system, said communication system comprising:
- a plurality of end-user terminals (13), each terminal comprising a user profile for effecting telecommunication calls;
- a communication server (5) adapted to provide telecommunication services to and from said terminals, and having access to a database (12) with user profiles in correspondence with an end-user terminal;
said method comprising the steps of:
- sensing (20) proximate to each terminal, an identity using non-tactile radio means;
- loading (32) proximate terminal, from said database, with a user profile corresponding to said proximately-sensed identity, thereby enabling the identity of outgoing calls to correspond to the sensed identity.

2. A method according to claim 1, wherein the non-tactile radio means comprise Wifi radio.

3. A method according to claim 1 or 2, wherein if a plurality of identities are sensed, a method of triangulation is used to determine closest identity from terminal, and to load corresponding user profile.

4. A method according to claim 3, wherein the server further comprises a controller (41) in communication with a plurality of Wifi antennas (43), wherein the controller is adapted to triangulate a Wifi-enabled device (17) via the Wifi antennas.

5. A method according to claim 1 or 2, wherein if a plurality of identities are sensed, the server (5) request for confirmation of the choice of identities by the user of the terminal.

6. A method according to any one of the preceding claims, wherein the non-tactile radio sensing means is a Wifi tag device (15).

7. A method according to any one of the preceding claims, effected dynamically when a user places a call, such that the outgoing call user profile is that of the proximate user rather than the default user profile affected to the term inal.

8. A PBX-type communication system for making phone calls enterprise using a custom identity, comprising:
- a plurality of end-user terminals, each terminal comprising a user profile for effecting telecommunication calls;
- a communication server adapted to provide telecommunication services to and from said terminals, and having access to a database with user profiles in correspondence with an end-user terminal; and
wherein
- at least one of said terminals is associated with a non-tactile identity-sensing radio device;
- said communication server is adapted to load said terminals with a new user profile corresponding to the identity sensed by said identity-sensing device, thereby enabling the identity of outgoing calls to correspond to the sensed identity.

9. A system according to claim 8, wherein the non-tactile radio device is a Wifi detection device (15).

10. A system according to claim 8, wherein the non-tactile radio device is a Bluetooth detection device.

11. A system according to any one of the preceding claims 8 to 10, further comprising a controller (41) in communication with a plurality of Wifi antennas (43), wherein the controller is adapted to triangulate a Wifi-enabled device (17) via the Wifi antennas.

12. A system according to claim 11, wherein if a plurality of identities are sensed, a method of triangulation is used to determine closest identity from terminal, and to load corresponding user profile.

13. Computer program adapted for executing a method according to any one of the preceding claims 1 to 7.
